# EUROPEAN PATENT SPECIFICATION

(11) **EP 1 130 166 B1**
(45) Date of publication and mention of the grant of the patent: **26.10.2005**
(21) Application number: 00122681.0
(22) Date of filing: 15.11.2000
(51) Int. Cl.: E01F 7/04

(54) **A protective barrier for arresting falling rocks, having a sack-type retaining net anchored to top and bottom cables**
Eine Schutzvorrichtung für Steinschlag, mit beutelförmigen Rückhaltenetz mit Verankerungskabeln an Ober- und Unterseite
Une barrière de protection pour l'arrêt de chûtes de pierres, présentant un filet de retenue du type sachet avec ancrage par cables en haut et en bas

(30) Priority: 25.02.2000 IT MI000355
(43) Date of publication of application: 05.09.2001
(73) Proprietor: CARGNEL, Gianangelo, I-32100 Belluno (IT)
(72) Inventor: CARGNEL, Gianangelo, I-32100 Belluno (IT)
(74) Representative: Petruzziello, Aldo

(56) References cited:
- EP-A- 0 265 436
- EP-A- 0 877 122
- US-A- 5 395 105
- PATENT ABSTRACTS OF JAPAN vol. 1996, no. 02, 29 February 1996 (1996-02-29) & JP 07 252808 A (HIROSHI YOSHIDA), 3 October 1995 (1995-10-03)

## Description

The invention refers to the field of protective barriers for arresting falling rocks, as currently widely used on slopes to protect inhabited areas, constructions, and portions of road networks, against falling stones, earth or rocks in general.

A wide variety of forms of protective barriers against falling rocks are known to the art, among which is a structure forming the subject matter of prior patent No. EP-B-0265436 by the same applicant.

The objects of this application are to reduce the investment costs for a protective barrier against falling rocks and to enable easier assembly thereof.

These objects are achieved with a protective barrier as stated in claim 1. Further advantageous characteristics will be apparent from the dependent claims.

The new barrier comprises a plurality of uprights, each pivotally mounted with a foot thereof on a respective plinth and stayed by means of bracing or windbracing cables anchored to the ground, in particular a downstream windbracing cable and one or more upstream windbracing cable for each upright. A top cable or rope extends through the tops of the uprights and is anchored to the ground at the ends thereof and a bottom cable or rope extends through the ground anchorages of the upstream windbracing cables. Cross or transverse cables are preferably provided between adjacent upstream windbracing cables, and more precisely between the tops of each upright and the anchorage of an upstream windbracing cable of an adjacent upright.

The "sack-type" net is secured to the top cable and to the bottom cable and extends above the upstream windbracing cables and the cross or transverse cables.

The new barrier has lower production and assembly costs with respect to the majority of existing barriers and is easier to mount.

According to a further characteristic, the uprights of the new barrier have threaded through holes at various heights, possibly with welded plate reinforcements, so that the top cable can be stretched at a uniform height even in the event of a difference in height between the plinths or bases of the upright.

Exemplary unrestrictive embodiments of the barrier will be described with reference to the appended drawings in which:

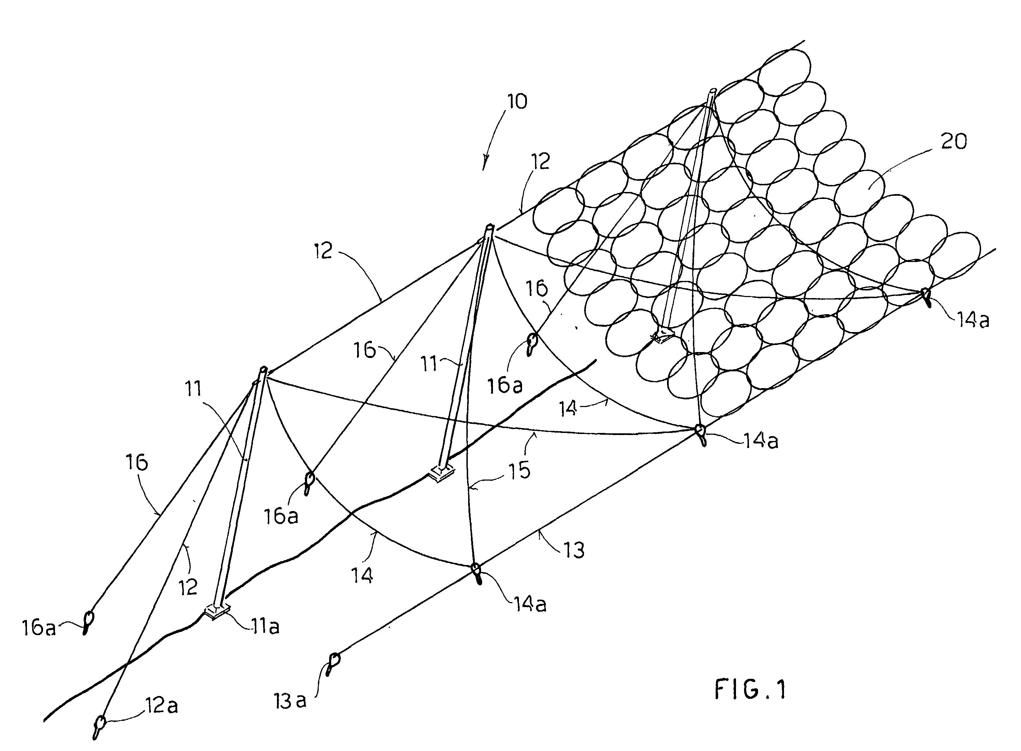

- Figure 1 is an axonometric view of a new barrier, a net thereof is only partially illustrated;
- Figure 2 is a side elevational view of the barrier, from the left in Figure 1;
- Figure 3 is an elevational view of the barrier, seen from the downstream side;
- Figure 4 is a top plan view of the barrier, the upstream side is drawn in the upper part of the drawing;

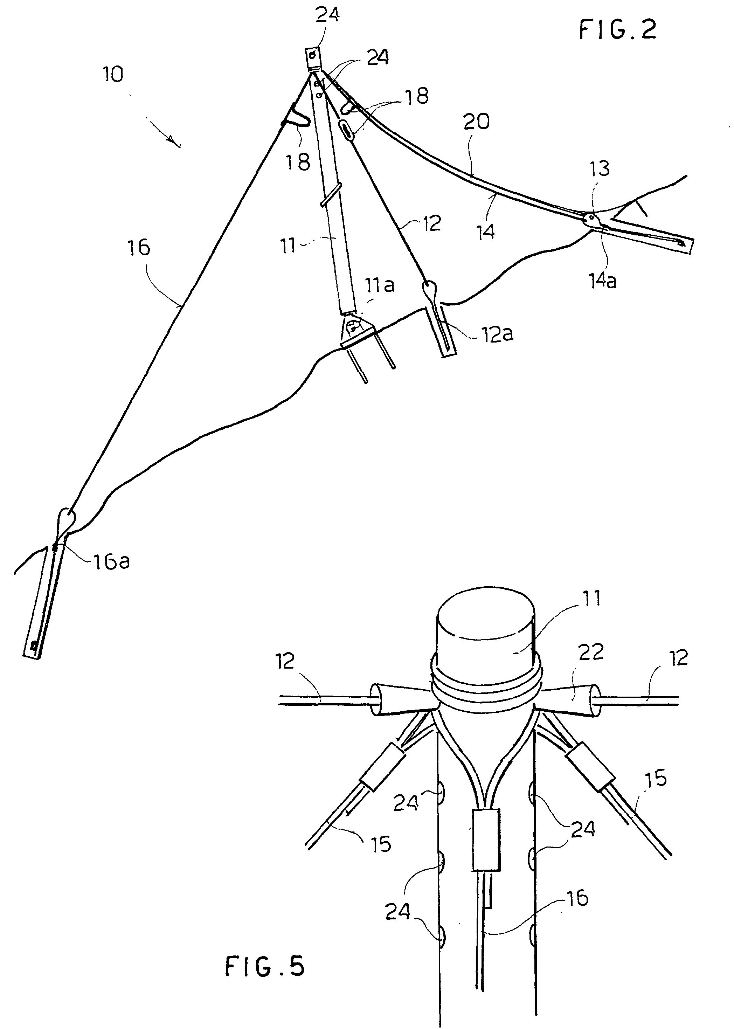

- Figure 5 is a view of the detail A circled in Figure 3, enlarged with respect to said figure;

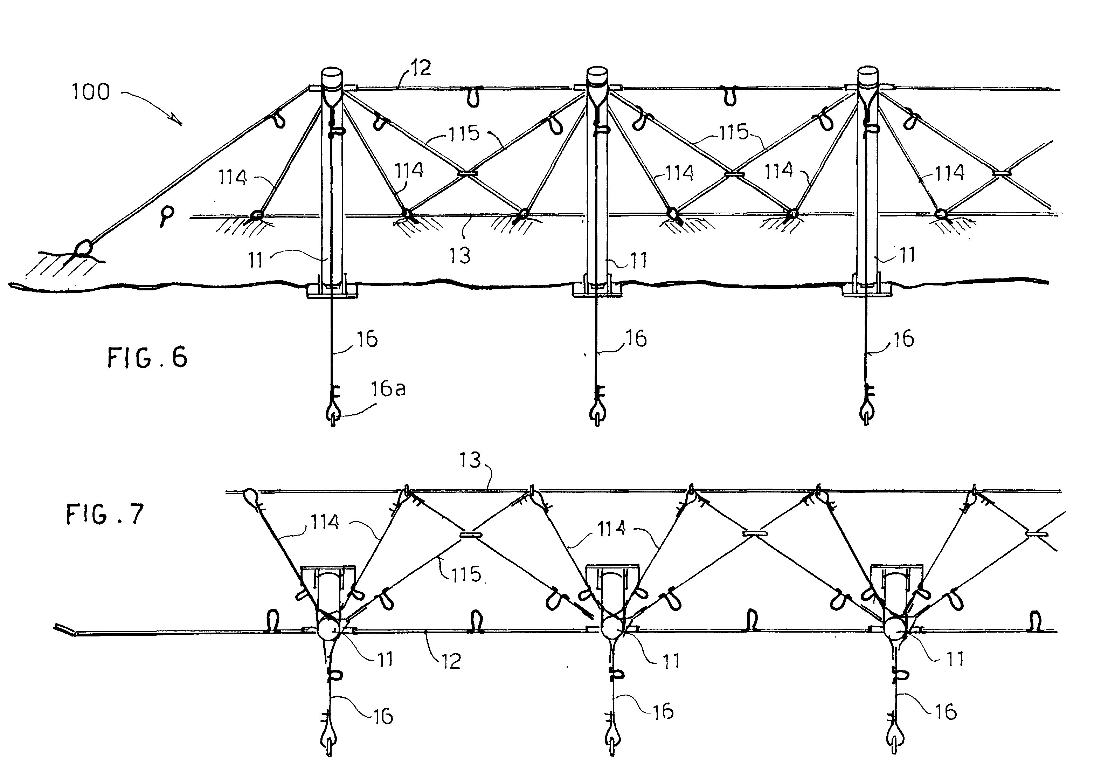

- Figure 6 is a broken-away from elevational view of a variant of a barrier according to the invention;
- Figure 7 is a broken-away top plan view of the barrier of figure 6, the upstream portion is drawn in the upper part of the drawing;

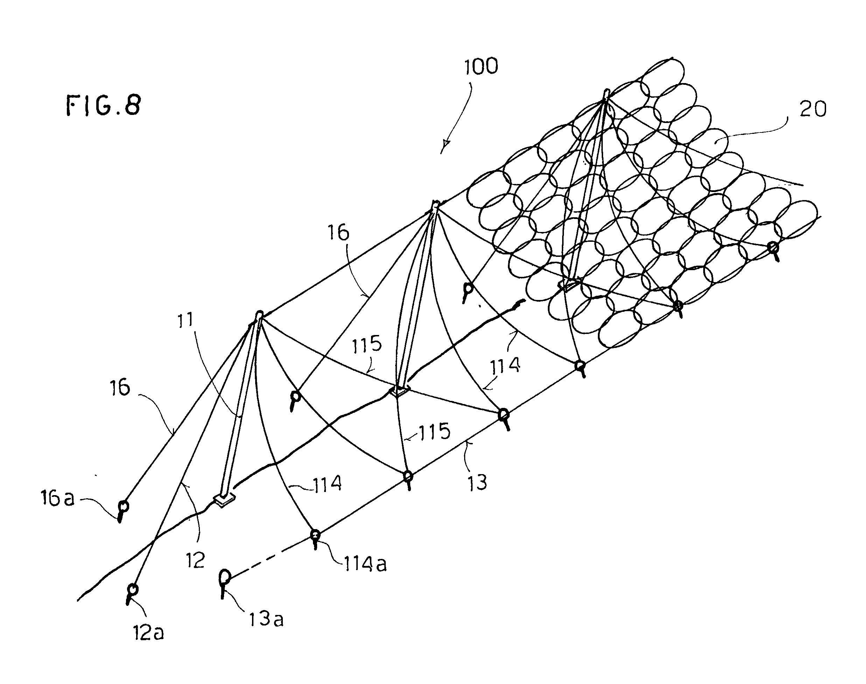

- Figure 8 is a broken-away axonometric view of the barrier of figure 6 and 7, as seen from above and from the upstream side.

A protective barrier for arresting falling rocks according to the invention is referenced 10 as a whole and comprises a plurality of spaced uprights 11, each erected on a base or plinth 11ₐ in the ground, to which it is joined by means of a cardanic system known from the said previous patent. Each upright 11 is held erect by means of bracing or windbracing cables, of which an upstream cable is referenced 14 and a downstream cable is referenced 16. Each windbracing cable extends from the top of the upright to a respective anchorage, referenced 14a for cable 14 and 16a for cable 16, of a conventional type, driven into the ground.

A top cable or rope 12 extends substantially horizontally through the tops of a plurality of uprights 11 and is anchored to the ground at its ends by means of anchorages 12a.

A bottom cable or rope 13 extends through substantially aligned anchorages 14a of the windbracing cables 14, and has its ends preferably anchored to the ground by means of anchorages 13a.

Cross or transverse cables 15 each extends from the top of a respective upright 11 to the anchorage of an upstream windbracing cable 14 of an adjacent upright 11, so that two cables 15, arranged crossed over, extend between two upstream windbracing cables 14. The cable portions that cross over can be left free or connected to one another, through means that allow reciprocal sliding thereof.

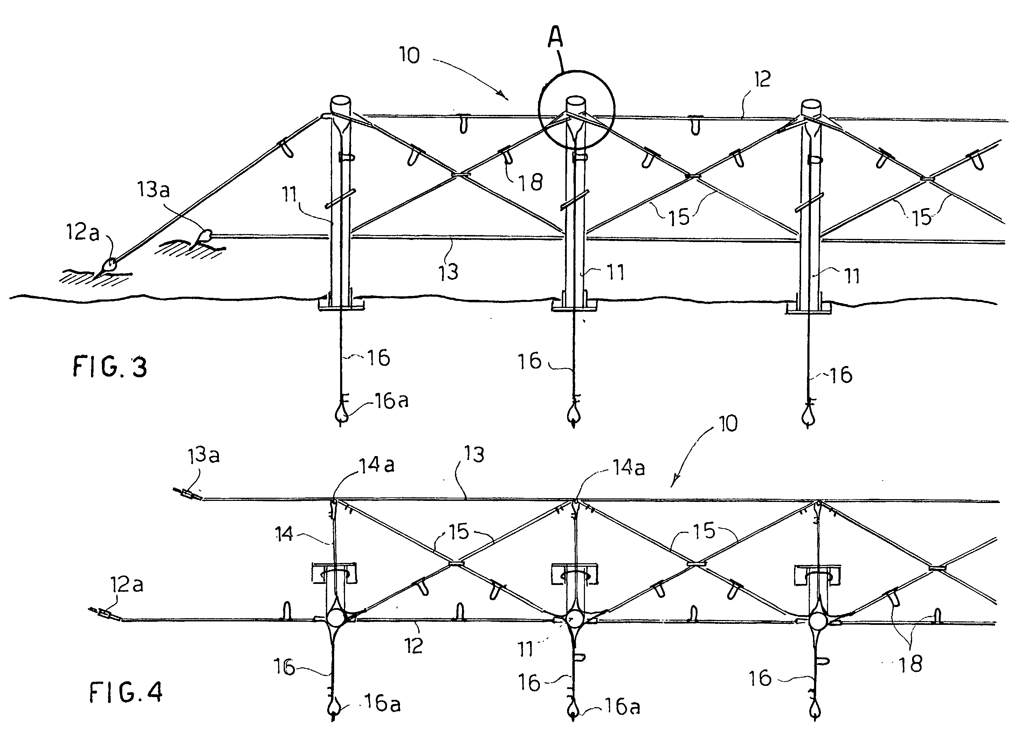

A retaining net 20 disposed "bag-like" or "sack-like" is integrally secured with its upper edge to the top cable 12 and with its lower edge to the bottom cable 13. The central body of the net is then placed over the cables 14 and 15 as is better seen in Figure 2 and can rest thereon. The net 20 is preferably, but not necessarily, a chainlink net. The cables can be provided with per se known shock-absorbing systems 18, per se known from previous patent EP-B-0265436.

When rocks fall along the ground, the assembly reacts elastically, retaining them on the net 20, without them being able to damage the uprights or other parts of said assembly.

Furthermore, according to the invention, the top cable 12, which extends through the head of the upright, is received inside tube-shaped or cone-shaped devices 22, locked in the head of the upright.

A plurality of said holes 24 are preferably provided at different heights in the head of the upright, so that the operator who mounts the protective barrier against falling rocks can choose on a case by case basis to apply the devices 22 in the hole 24 at the most suitable height. The pierced area of the upright is preferably reinforced with a welded plate.

A modified embodiment of the protective barrier is shown in gigures 6, 7, 8 and referenced 100 as a whole.

Elements of the protective barrier 100 which are similar to homologous elements of barrier 10 have the same reference numbers and will not be described in detail.

The barrier 100 has two upstream bracing cables 114, instead of one, for each upright. The cables 114 diverge from the top of the upright to anchorages 114a and are preferably symmetrical with respect to a vertical plane containing the upright axis and the downstream bracing cable.

Cross or transverse cables extend each between the top of an upright 11 and the anchorage 114a of a nearest bracing cable 114 of an adjacent upright 11, and may be independent from each other or restrained together at an intermediate position so to be able to slide.

A net 20 is applied as above said for the barrier 10.

## Claims

1. A protective barrier for arresting falling rocks comprising: a plurality of uprights (11), each linked to the ground by means of a foot or plinth on which it is articulated and each maintained erect by means of bracing cables, of which at least one is an upstream cable (14; 114) and at least one a downstream cable (16), a net (20) mounted upstream of the plurality of uprights
**characterized in that** it further comprises:
- at least one top cable (12) extending between the tops of said uprights and anchored to the ground at the ends thereof;
- at least one bottom cable (13) extending through the ground anchorages (14'; 114') of the upstream bracing cables;
the net being linked to said top cable (12) and to said bottom cable (13) and disposed above said upstream bracing cable or bracing cables.

2. A barrier according to claim 1, **characterized in that** it comprises upstream transverse or cross cables (15), arranged transversally to the aforesaid bracing cables.

3. A barrier according to claim 2, in which said transverse cables (15) are each arranged respectively between the head of an upright (11) and a foot or anchorage (14a, 114a) of a bracing cable (14; 114) upstream of an adjacent upright (11), so that at least two cross cables (15) extend between two upstream bracing cables of two adjacent uprights.

4. A barrier according to claim 1, **characterized in that** said top cable (12) extends through holes in the head of the uprights (10).

5. A barrier according to claim 4, **characterized in that** the uprights comprise a plurality of through holes (24) spaced longitudinally along it, with possible welded plate reinforcement(s).

6. A barrier according to claim 4 or 5, **characterized in that** the top cable (12), passing through the heads of the uprights, is received within devices (22) locked in the head of the upright.

7. A barrier according to claim 2, in which at least some of said cables comprise shock-absorbing systems.

8. A barrier according to claim 3, **characterized in that** said cross cables (15) are connected to one another slidingly at the crossed portions thereof.

9. A barrier according to claim 1 **characterized in that** it comprises one upstream bracing cable (14) for an upright (11).

10. A barrier according to claim 1 **characterized in that** it comprises two upstream bracing cables (114) for an upright.

## Patentansprüche

1. Eine Schutzabsperrung zum Auffangen von fallendem Gestein, die folgendes umfasst: eine Vielzahl von Pfosten (11), welche jeweils mit Hilfe eines Fußes oder Sockels am Boden arretiert sind, an dem sie jeweils angelenkt und aufrecht gehalten werden durch Spannkabel, von denen mindestens eins ein stromaufwärts gerichtetes Kabel (14, 114) und mindestens eins ein stromabwärts gerichtetes Kabel (16) ist, ein Netz (20), das stromaufwärts der Vielzahl von Pfosten installiert ist, **dadurch gekennzeichnet, dass** sie des weiteren folgendes umfasst:
- mindestens ein oberes Kabel (12), das sich zwischen den Spitzen der genannten Pfosten erstreckt und an deren Enden am Boden verankert ist;
- mindestens ein unteres Kabel (13), das sich durch die Bodenverankerungen (14', 114') der stromaufwärts gerichteten Spannkabel erstreckt;
wobei das Netz mit dem genannten oberen Kabel (12) und mit dem genannten unteren Kabel (13) verbunden und jeweils über dem genannten aufwärts gerichteten Spannkabel oder den genannten Spannkabeln angeordnet ist.

2. Eine Schutzabsperrung gemäß Anspruch 1, **dadurch gekennzeichnet, dass** sie stromaufwärts gerichtete Quer- oder gekreuzte Kabel (15) umfasst, die quer zu den zuvor erwähnten Spannkabeln angeordnet sind.

3. Eine Schutzabsperrung gemäß Anspruch 2, bei der die genannten Querkabel (15) jeweils zwischen dem Kopfteil eines Pfostens (11) und einem Fuß oder einer Verankerung (14a, 114a) eines Spannkabels (14, 114) stromaufwärts eines anliegenden Pfostens (11) angeordnet sind, so dass mindestens zwei gekreuzte Kabel (15) sich jeweils zwischen zwei stromaufwärts gerichteten Spannkabeln von zwei anliegenden Pfosten erstrecken.

4. Eine Schutzabsperrung gemäß Anspruch 1, **dadurch gekennzeichnet, dass** das genannte obere Kabel (12) sich durch Öffnungen im Kopfteil des Pfostens (10) erstreckt.

5. Eine Schutzabsperrung gemäß Anspruch 4, **dadurch gekennzeichnet, dass** die Pfosten eine Vielzahl von durchgehenden Öffnungen (24) aufweisen, die jeweils auseinander liegend längs daran entlang angeordnet sind, und zwar mit eventueller/en verschweißten Verstärkungsplatte/en.

6. Eine Schutzabsperrung gemäß den Ansprüchen 4 oder 5, **dadurch gekennzeichnet, dass** das obere Kabel (12), das durch die Kopfteile der Pfosten verläuft, jeweils in Vorrichtungen (22) enthalten ist, welche im jeweiligen Kopfteil des Pfostens verriegelt sind.

7. Eine Schutzabsperrung gemäß Anspruch 2, bei der mindestens einige der genannten Kabel Stoßdämpfungssysteme umfassen.

8. Eine Schutzabsperrung gemäß Anspruch 3, **dadurch gekennzeichnet, dass** die genannten gekreuzten Kabel (15) gleitbar miteinander an deren gekreuzten Abschnitten verbunden sind.

9. Eine Schutzabsperrung gemäß Anspruch 1, **dadurch gekennzeichnet, dass** sie ein stromaufwärts gerichtetes Spannkabel (14) für einen Pfosten (11) umfasst.

10. Eine Schutzabsperrung gemäß Anspruch 1, **dadurch gekennzeichnet, dass** sie zwei stromaufwärts gerichtete Spannkabel (114) für einen Pfosten umfasst.

## Revendications

1. Barrière de protection pour arrêter les chutes de rochers comprenant : une pluralité de montants (11), chacun étant relié au terrain au moyen d'un pied ou d'une plinthe sur lequel/laquelle il est articulé et chacun étant maintenu droit par des câbles d'étai, dont au moins un câble est un câble en amont (14 ; 114) et au moins un câble est un câble en aval (16), un grillage (20) monté en amont de la pluralité des montants
**caractérisée en ce qu'**elle comprend également :
- au moins un câble de sommet (12) s'étendant entre les têtes desdits montants et ancré au sol à leurs extrémités ;
- au moins un câble de base (13) s'étendant à travers les ancrages au sol (14' ; 114') des câbles d'étai en amont ;
le grillage étant relié audit câble de sommet (12) et audit câble de base (13) et placé au-dessus dudit câble d'étai en amont ou câbles d'étai.

2. Barrière selon la revendication 1, **caractérisée en ce qu'**elle comprend des câbles transversaux ou de traverse en amont (15), placés transversalement par rapport aux dits câbles d'étai.

3. Barrière selon la revendication 2, où lesdits câbles transversaux (15) sont placés chacun respectivement entre la tête d'un montant (11) et un pied ou ancrage (14a, 114a) d'un câble d'étai (14 ; 114) en amont d'un montant adjacent (11), de sorte qu'au moins deux câbles de traverse (15) s'étendent entre deux câbles d'étai en amont de deux montants adjacents.

4. Barrière selon la revendication 1, **caractérisée en ce que** ledit câble de sommet (12) s'étend à travers des orifices de passage dans la tête des montants (10).

5. Barrière selon la revendication 4, **caractérisée en ce que** les montants comprennent une pluralité d'orifices de passage (24) espacés dans le sens longitudinal le long de celle-ci, avec un/des renfort(s) à plaque soudée éventuel(s).

6. Barrière selon la revendication 4 ou 5, **caractérisée en ce que** le câble de sommet (12), passant à travers la tête des montants, est accueilli dans des dispositifs (22) bloqués dans la tête du montant.

7. Barrière selon la revendication 2, où au moins quelques-uns des dits câbles comprennent des systèmes d'amortissement des chocs.

8. Barrière selon la revendication 3, **caractérisée en ce que** lesdits câbles de traverse (15) sont reliés entre eux de façon coulissante au niveau des portions croisées de ceux-ci.

9. Barrière selon la revendication 1, **caractérisée en ce qu'**elle comprend un câble d'étai en amont (14) pour un montant (11).

10. Barrière selon la revendication 1, **caractérisée en ce qu'**elle comprend deux câbles d'étai en amont (114) pour un montant.
